Europäisches Patentamt

European Patent Office

Office européen des brevets

(11) Publication number: **0 500 945 A1**

## EUROPEAN PATENT APPLICATION
### published in accordance with Art. 158(3) EPC

(21) Application number: **91913828.9**

(22) Date of filing: **06.08.91**

(86) International application number:
**PCT/JP91/01048**

(87) International publication number:
**WO 92/02797 (20.02.92 92/05)**

(51) Int. Cl.5: **G01L 9/08**

(30) Priority: **07.08.90 JP 208949/90**

(43) Date of publication of application:
**02.09.92 Bulletin 92/36**

(84) Designated Contracting States:
**DE FR GB IT NL**

(71) Applicant: **SEIKO EPSON CORPORATION**
**4-1, Nishishinjuku 2-chome**
**Shinjuku-ku Tokyo 163(JP)**

(72) Inventor: **TAKENAKA, Kazuhiro**
**3-5, Owa 3-chome**
**Suwa-shi, Nagano-ken 392(JP)**

(74) Representative: **Ouinterno, Giuseppe**
**c/o Jacobacci-Casetta & Perani S.p.A. Via Alfieri, 17**
**I-10121 Torino(IT)**

(54) **PRESSURE SENSOR.**

(57) A high accuracy pressure sensor for converting a pressure into an electric signal, obtained by making the thickness of at least one part, referred to as an Si membrane, of an Si substrate, thinner than that of the other part, and by forming a capacitor of a piezoelectric thin film on the Si membrane.

Fig. 1 (a)

EP 0 500 945 A1

## FIELD OF THE INVENTION

The present invention relates to a structure of a pressure sensor which detects pneumatic pressure, hydraulic pressure, etc. and converts them to an electric signal.

## BACKGROUND OF THE INVENTION

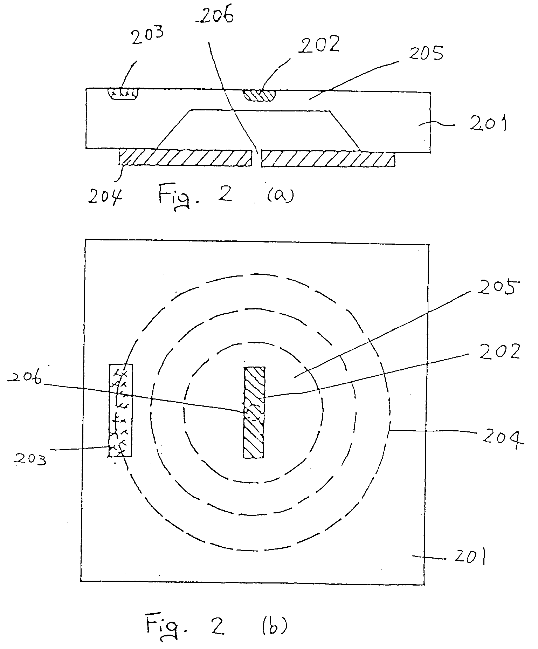

As a conventional pressure sensor using a Si membrane as like that of the present invention, a pressure sensor has been proposed such that, as shown in Fig. 2, a partially thinned Si membrane (205) is formed on a Si substrate (201), and that a diffusion resistance (202) of the opposite conductive type of the Si substrate (201) is formed in the membrane. Here, the reference numeral (204) indicates plates which make a pressure-detecting port, and (206) a pressure-detecting port.

However, a pressure sensor according to the conventional art are those types which are based on the principle that detects variations of a diffusion resistance generated in a Si membrane by utilizing flexure of the Si membrane caused by a pressure difference, and accordingly, an amount of the variation or change is, in general, too small (for example, less than 1 % in the atmospheric pressure), so that the precision of a measurement was that which could not satisfy at all. In addition, since the amount of change was very small, it was required to form a standard resistance, as shown by the reference numeral (303), onto a thick portion of the Si substrate, and to detect the difference between the value of the standard resistance and that of the diffusion resistance formed in the Si membrane by using, for example, a bridge circuit.

The present invention is to solve the aforementioned problems, and an object of the present invention is to provide a pressure sensor which can output a high output voltage and detect a pressure difference precisely.

## DISCLOSURE OF THE INVENTION

In the pressure sensor for converting pressure into an electric signal, the present invention succeeds in obtaining a pressure sensor having a precise detecting capacity by making a part of a Si substrate thinner than that of the other part thereof (this thinned part is referred hereinafter to a Si membrane) and forming a capacitor made of a thin film of a piezoelectric material on the Si membrane part.

## BRIEF DESCRIPTION OF THE DRAWINGS

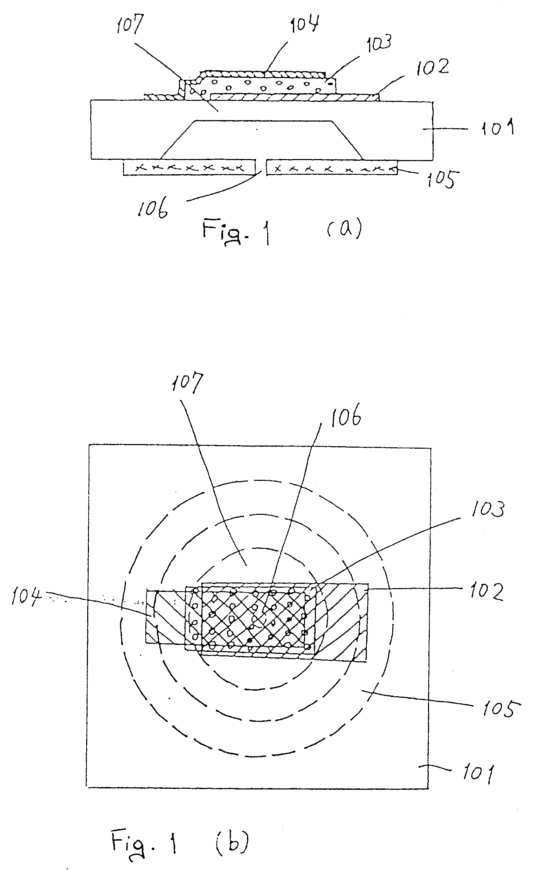

Fig. 1(a) is a main sectional view of the present invention; Fig. 1(b) is a main plan view of the present invention; Fig. 2(a) is a main sectional view of a pressure sensor according to the conventional art; and Fig. 2(b) is a main plan view of the pressure sensor according to the conventional art.

## BEST MODE FOR CARRYING OUT THE INVENTION

Fig. 1(a) is a main sectional view of an embodiment of the pressure sensor according to the present invention, and Fig. 1(b) is a main plan view. Hereinaftor, with reference to Fig. 1, the pressure sensor according to the present invention is described.

The reference numeral (101) indicates a Si substrate, its thickness is, for example, 600 $\mu$m. The reference numeral (107) is a Si membrane formed at the Si substrate, and it is formed by etching to make its thickness of, for example, 10 $\mu$m. The reference numeral (103) is a piezoelectric film serving as an element of the present invention, and is formed by, for example, PZT to have its thickness of 1 $\mu$m. As other piezoelectric films there are, for example, such as made of PLZT, $PbTiO_3$, etc. The reference numeral (102) indicates a lower electrode of a piezoelectric film, and for example, it is formed to thickness of 1 $\mu$m by Al. (104) is an upper electrode which formed by Al, and its thickness is 1 $\mu$m as like that of the lower electrode. Methods for forming these electrodes and the piezoelectric films include as one example steps of forming a thin film by using a sputtering process, and forming a predetermined pattern of the film by using the exposure technique. Thereafter, a capacitor formed by the piezoelectric film is constructed by the lower electrode (102), the piezoelectric film (103) and the upper electrode (104). The reference numeral (105) indicates a plate which defines a pressure-detecting port, and for example, a plate of Cu is used as the plate. The reference numeral (106) is a pressure-detecting port.

In such a pressure sensor of the construction shown in Fig. 1, the principle of constructing the pressure sensor lies in detecting an output of the capacitor made of piezoelectric film formed on the Si membrane by utilizing the flexure of the Si membrane caused by a pressure difference, therefore, a high output voltage value could be obtained (150 mV at 1 atmospheric pressure). In addition, different from the conventional cases, there is no necessity to arrange a diffusing resistance for comparison. An output voltage is in proportion to an area of the capacitor, so that in the case of obtaining a high output voltage, only the area of the capacitor is to be expanded. That is, according to the present invention, any desired output voltage can be obtained freely.

Further, the method for manufacturing the semiconductor can also be applied to the processes of forming electrodes, piezoelectric film, etc., so that the present invention is suitable for the mass production system.

INDUSTRIAL AVAILABILITY

In the pressure sensor which converts pressure into an electric signal, such as the pressure sensor according to the present invention, a Si membrane is formed at a Si substrate, and on the Si membrane a capacitor made of a piezoelectric film is formed, so that a pressure sensor which can output a high output voltage and have a precise detecting function can be obtained.

**Claims**

1. A pressure sensor for converting pressure into an electric signal characterized in that at least a thickness of a part of a Si substrate is thinner than that of other parts thereof, and a capacitor composed of a piezoelectric thin film is formed on the main surface of said thinner part of said Si substrate.

Fig. 1    (a)

Fig. 1    (b)

Fig. 2 (a)

Fig. 2 (b)

# INTERNATIONAL SEARCH REPORT

International Application No PCT/JP91/01048

**I. CLASSIFICATION OF SUBJECT MATTER** (if several classification symbols apply, indicate all) [6]

According to International Patent Classification (IPC) or to both National Classification and IPC

Int. Cl$^5$    G01L9/08

**II. FIELDS SEARCHED**

Minimum Documentation Searched [7]

| Classification System | Classification Symbols |
|---|---|
| IPC | G01L9/00-9/08, G01L13/00-13/06, G01L23/00-23/24 |

Documentation Searched other than Minimum Documentation
to the Extent that such Documents are Included in the Fields Searched [8]

| | |
|---|---|
| Jitsuyo Shinan Koho | 1926 - 1990 |
| Kokai Jitsuyo Shinan Koho | 1971 - 1990 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X | JP, A, 58-182285 (Honeywell Inc.), October 25, 1983 (25. 10. 83) & GB, B2, 2,119,098 & DE, A1, 3,311,128 & US, A, 4,445,384 & US, A, 4,531,267 | 1 |
| Y | JP, A, 53-114690 (Yokogawa Electric Corp.), October 6, 1978 (06. 10. 78), (Family: none) | 1 |
| Y | JP, A, 59-31404 (Hitachi, Ltd.), February 20, 1984 (20. 02. 84) & EP, A1, 106,050 & US, A, 4,556,807 | 1 |
| Y | JP, A, 62-151733 (AVL Gesellschaft für Verbrennungskraftmaschinen und MeBtechnik m.b.H., Prof. Dr. Dr. h. c. Hans List), July 6, 1987 (06. 07. 87), (Family: none) | 1 |
| Y | JP, A, 48-90489 (Nippon Telegraph & Telephone Public Corp.), November 26, 1973 (26. 11. 73), (Family: none) | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| September 27, 1991 (27. 09. 91) | October 14, 1991 (14. 10. 91) |

| International Searching Authority | Signature of Authorized Officer |
|---|---|
| Japanese Patent Office | |

Form PCT/ISA/210 (second sheet) (January 1985)